# FASCICULE DE BREVET EUROPEEN

(11) **EP 1 711 361 B1**
(45) Date de publication et mention de la délivrance du brevet: **10.07.2013**
(21) Numéro de dépôt: 05717545.7
(22) Date de dépôt: 03.02.2005
(51) Int. Cl.: B60J 7/14

(54) **TOIT ESCAMOTABLE DANS LE COFFRE ARRIÈRE D'UN VÉHICULE, COMPRENANT DES ÉLÉMENTS LATÉRAUX DÉPLACABLES**
IN EINEM KRAFTFAHRZEUGKOFFERRAUM VERSENKBARES DACH, MIT VERLAGERBAREN SEITENTEILEN
ROOF RETRACTABLE IN THE TRUNK OF A VEHICLE COMPRISING LATERAL DISPLACEABLE ELEMENTS

(30) Priorité: 04.02.2004 FR 0450207
(43) Date de publication de la demande: 18.10.2006
(73) Titulaire: Société Européenne de Brevets Automobiles - SEBA, 75011 Paris 11 (FR)
(72) Inventeur: QUEVEAU, Gérard, F-79140 Le Pin (FR); QUEVEAU, Paul, F-79140 Montravers (FR); GUILLIEZ, Jean-Marc, F-79140 Cirieres (FR)
(74) Mandataire: Novagraaf Technologies
(86) Numéro de dépôt international: PCT/FR2005/000233
(87) Numéro de publication internationale: WO 2005/082660

(56) Documents cités:
- EP-A- 0 678 411
- DE-A- 19 737 259
- US-A1- 2002 093 217

## Description

L'invention concerne un toit escamotable dans le coffre arrière d'un véhicule.

Un tel toit escamotable permet en particulier de transformer un véhicule automobile de type coupé en un véhicule de type cabriolet.

On connaît notamment par des brevets au nom de la demanderesse, des toits escamotables dans le coffre arrière d'un véhicule automobile.

En particulier, le document FR 2 805 218 décrit un toit escamotable comprenant un élément de toit avant rigide relié de façon articulée à un élément central arrière rigide, dont l'extrémité arrière est reliée au châssis du véhicule, et des éléments latéraux reliés à l'élément central arrière. Dans ce toit, il est prévu que les éléments latéraux puissent se dégager de la surface extérieure de l'élément central arrière, lors du déplacement dudit élément central vers l'arrière. Ainsi, lorsque tous les éléments de toit sont rangés dans le coffre du véhicule, on obtient une hauteur de rangement dans le coffre satisfaisante.

Toutefois, un tel agencement ne prend pas en compte, lorsque le toit est escamoté dans le coffre arrière, l'encombrement dû aux logements protégeant les feux arrières du véhicule, qui empiètent sur le volume utile du coffre.

Pour remédier à cet inconvénient, l'invention propose un toit escamotable dont tous les éléments peuvent être escamotés de façon satisfaisante dans le coffre, malgré la présence des logements protégeant les feux et ce tout en laissant un espace suffisant pour le rangement des bagages.

A cet effet, et selon un premier aspect, l'invention propose un toit escamotable dans le coffre arrière d'un véhicule, comprenant un élément avant rigide relié de façon articulée à un élément central arrière rigide dont l'extrémité arrière est articulée au châssis du véhicule, et des éléments latéraux droit et gauche dont la partie avant est associée à l'élément avant, et dont la partie arrière est associée à l'élément central arrière, ces éléments étant mobiles entre une première position dans laquelle ils recouvrent l'habitacle du véhicule, et une deuxième position dans laquelle ils sont repliés à l'intérieur du coffre arrière, ce toit comprenant des premiers moyens d'entraînement des éléments latéraux, associés à l'élément avant, et des deuxièmes moyens d'entraînement des éléments latéraux, associés à l'élément central arrière, lesdits premiers et deuxièmes moyens d'entraînement étant agencés pour permettre le dégagement des éléments latéraux vers l'avant du véhicule lorsque les éléments avant et central arrière sont dans leur deuxième position.

Grâce à cet agencement, les éléments latéraux peuvent être aisément rangés dans le coffre arrière, malgré la présence des logements pour les feux du véhicule.

D'autres objets et avantages de l'invention apparaîtront au cours de la description qui suit, faite en référence aux dessins annexés dans lesquels :
- la figure 1 est une vue éclatée, en perspective, des éléments formant le toit du véhicule selon l'invention ;
- la figure 2 est une vue en coupe suivant A de la figure 2 ;
- la figure 3 est une vue schématique en coupe longitudinale du toit escamotable de la figure 1, montrant les élément de toit recouvrant l'habitacle du véhicule ;
- les figures 4 et 5 sont des vues schématiques partielles en coupe longitudinale d'un véhicule équipé du toit de la figure 3, montrant les éléments de toit en cours de rangement dans le coffre, dans deux positions successives ;
- la figure 6 est une vue similaire aux figures 4 et 5, montrant les éléments de toit rangés dans le coffre.

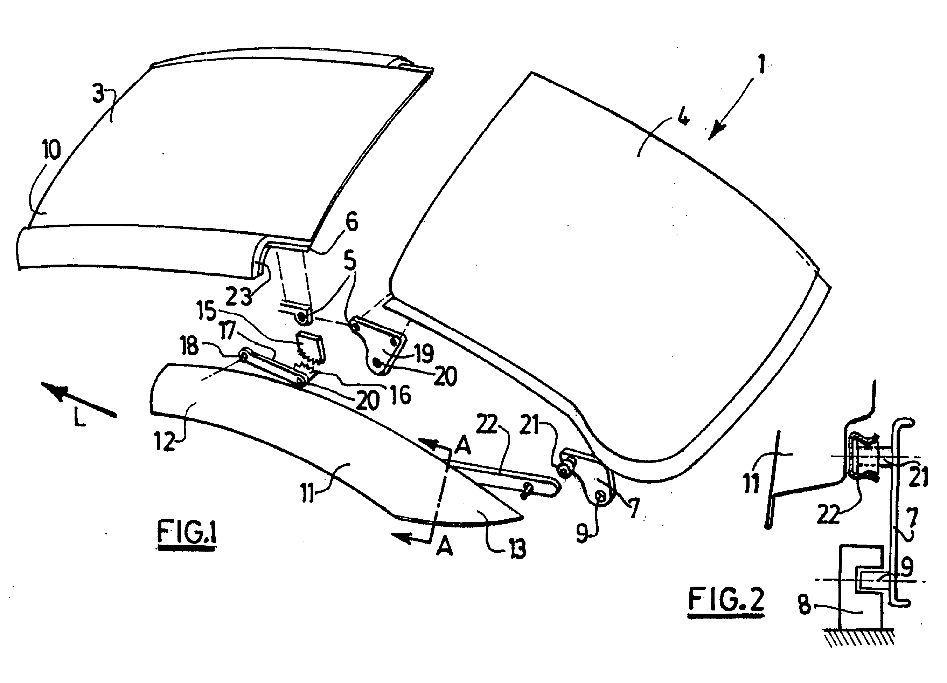

On décrit en relation avec les figures 1 à 6 un toit escamotable 1 dans le coffre arrière 2 d'un véhicule automobile.

Dans la suite de la description, les termes « avant, arrière, droit, gauche, horizontal, longitudinal, supérieur, inférieur » sont définis par rapport à un véhicule en cours d'utilisation.

Le toit escamotable 1 comprend un élément avant 3 rigide, qui est relié de façon articulée à un élément central arrière 4 rigide. Cette articulation s'effectue suivant un axe horizontal 5 perpendiculaire à l'axe longitudinal L du véhicule, qui passe par le bord inférieur arrière 6 dudit élément avant 3.

L'extrémité arrière 7 de l'élément central arrière 4 est articulée au châssis 8 du véhicule, suivant un axe horizontal 9 perpendiculaire à l'axe longitudinal L du véhicule, qui passe par le bord inférieur arrière 7 dudit élément central arrière.

Le toit comprend également des éléments latéraux 11 droit et gauche dont la partie avant 12 est associée à l'élément avant 3, et dont la partie arrière 13 est associée à l'élément central arrière 4.

Ces éléments avant 3, central arrière 4, et latéraux 11 sont mobiles entre une première position dans laquelle ils recouvrent l'habitacle du véhicule, et une deuxième position dans laquelle ils sont repliés à l'intérieur du coffre arrière 2, faisant ainsi passer le toit du véhicule d'une position fermée à une position complètement ouverte.

Selon l'invention, le toit 1 comprend des premiers moyens d'entraînement des éléments latéraux 11, lesdits premiers moyens étant associés à l'élément avant 3, et des deuxièmes moyens d'entraînement des éléments latéraux 11, lesdits deuxièmes moyens étant associés à l'élément central arrière 4. Ces premiers et deuxièmes moyens d'entraînement sont agencés pour permettre le dégagement des éléments latéraux 11 vers l'avant du véhicule, lorsque les éléments avant 3 et central arrière 4 sont dans leur deuxième position, c'est-à-dire rangés dans le coffre 2.

Ainsi, lorsque le toit 1 est escamoté dans le coffre 2, les éléments latéraux 11 sont décalés vers l'avant dudit coffre, en évitant ainsi la zone du coffre qui comprend les logements 14.

On décrit à présent les moyens d'entraînement des éléments latéraux 11, en relation avec les figures 1 à 3 sur lesquelles est représenté uniquement l'élément latéral gauche du véhicule.

Selon la réalisation représentée, les premiers moyens d'entraînement comprennent un secteur denté 15 prévu sur le bord inférieur arrière 6 de l'élément avant 3. Ce secteur denté 15 est agencé pour coopérer avec le secteur denté 16 d'une biellette 17 associée au bord avant 12 de l'élément latéral 11. L'une des extrémités de la biellette 17 est articulée au bord avant 12 de l'élément latéral 11, suivant un axe horizontal 18 perpendiculaire à l'axe longitudinal L du véhicule. L'extrémité opposée de la biellette 17 est articulée au bord avant 19 de l'élément central arrière 4 suivant un axe horizontal 20 perpendiculaire à l'axe longitudinal L du véhicule.

Les deuxièmes moyens d'entraînement comprennent un doigt 21 prévu sur la partie arrière 7 de l'élément central arrière 4, ce doigt étant agencé pour coopérer avec une glissière 22 associée au bord arrière 13 de l'élément latéral 11. Cette partie du toit 1 selon l'invention est représentée de façon agrandie, en coupe, sur la figure 2.

Dans un mode de réalisation, la glissière 22 a un profil courbé. Ainsi, l'élément latéral 11 peut contourner un élément proéminent situé dans le coffre arrière 2.

Notons que dans un mode de réalisation non représenté, les glissières 22 droite et gauche sont dissymétriques afin de contourner un élément proéminent situé dans le coffre arrière 2.

L'élément proéminent peut par exemple être un conduit d'alimentation du combustible.

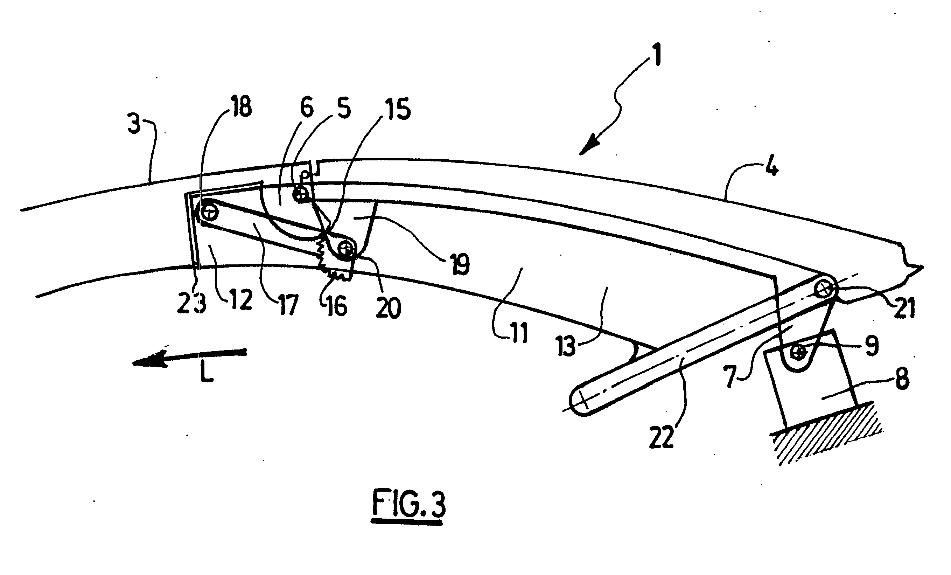

On décrit à présent, en relation avec les figures 3 à 6, le fonctionnement du toit escamotable selon l'invention, lorsque celui-ci passe de sa position fermée à sa position ouverte. Le passage de la position ouverte à la position fermée s'effectue selon un déplacement inverse des éléments de toit.

Lorsque le toit 1 est dans sa première position, à savoir sa position fermée (figure 3), les éléments avant 3 et central arrière 4 sont disposés dans le prolongement l'un de l'autre, et l'élément latéral 11 s'étend entre le bord arrière de l'élément avant 3 et le bord arrière de l'élément central arrière 4, le bord avant 12 de l'élément latéral venant se loger contre une surface 23 de l'élément avant 3.

Un tel agencement des éléments avant 3, central arrière 4 et latéraux 11 confère au toit 1 une bonne étanchéité, lorsque celui-ci est en position fermée.

Dans cette position, la biellette 17 s'étend sensiblement longitudinalement, le long de la partie avant 12 de l'élément latéral 11.

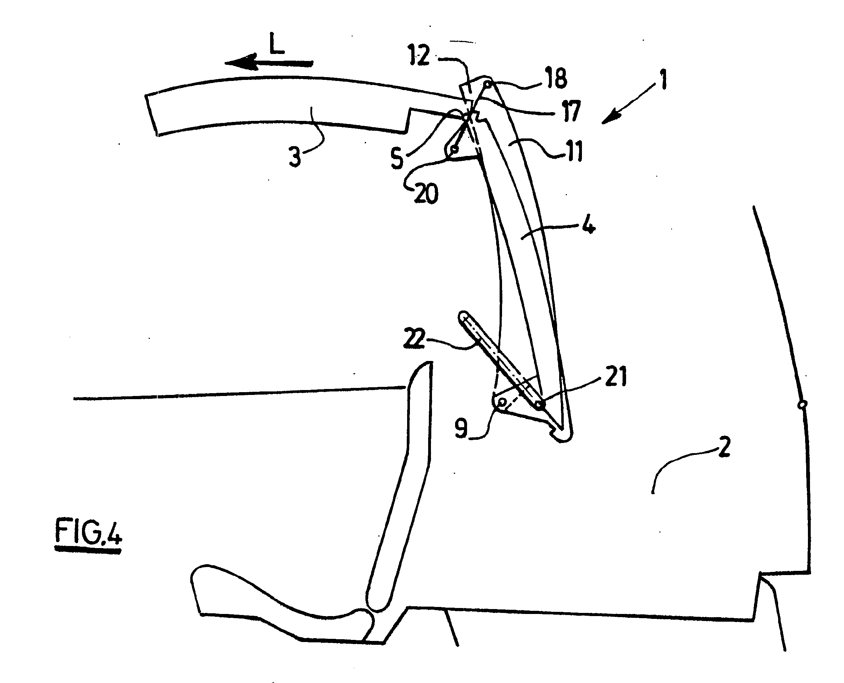

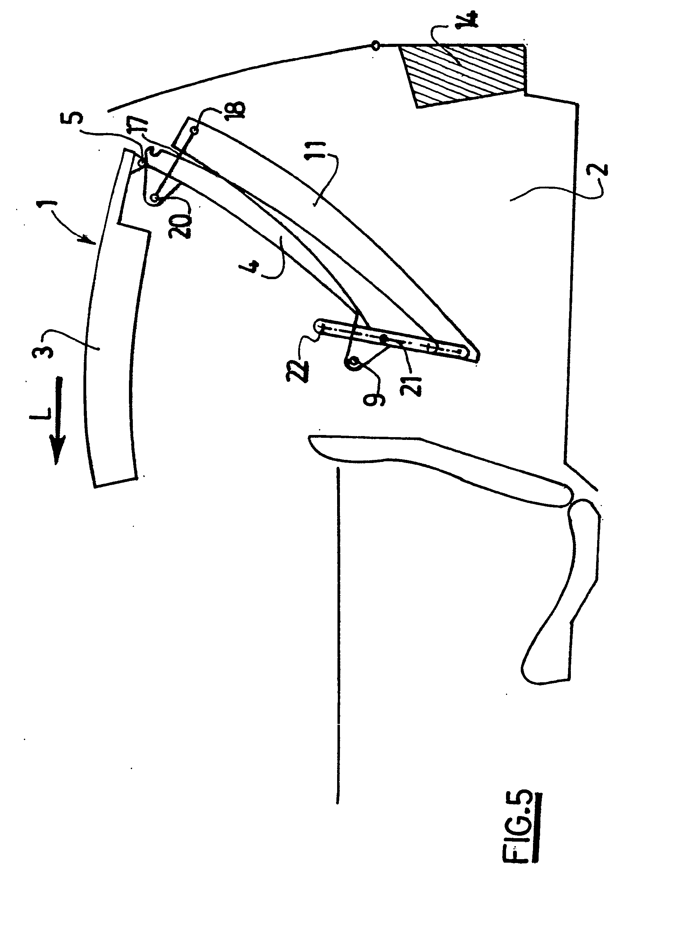

Le passage du toit 1 de sa première à sa deuxième position s'effectue de la façon suivante, illustrée par les figures 4 et 5. L'élément central arrière 4 pivote autour de son axe de rotation 9 et l'élément avant 3 est également entraîné par un bras articulé au châssis 8, non représenté. Lors du pivotement de l'élément avant 3 autour de son axe de rotation 5, le mouvement du secteur denté 15 entraîne le pivotement du secteur denté 16 de la biellette 17, et donc le pivotement de la biellette 17 elle-même, autour de son axe de rotation 20, vers le haut.

Ce déplacement de la biellette 17 entraîne également vers le haut le bord avant de l'élément latéral 11, selon l'axe de rotation 18, ce qui a pour effet de décaler vers le haut l'élément latéral 11 par rapport au bord avant 19 de l'élément central arrière 4.

Le bord arrière 13 de l'élément latéral 11 bascule vers l'arrière, et est maintenu par le doigt 21 prévu sur l'élément central arrière 4, ce doigt étant engagé dans la glissière 22.

Dans la position intermédiaire représentée sur la figure 4, l'élément latéral 11 et l'élément central arrière 4 sont sensiblement verticaux, l'élément avant 3 étant sensiblement perpendiculaire à l'élément central arrière 4.

Au fur et à mesure que le toit 1 bascule vers l'arrière (figure 5), la rotation de la biellette 17 entraîne le décalage vers l'arrière de l'élément latéral 11 par rapport à l'élément central arrière 4, l'élément latéral 11 étant toujours guidé et maintenu par l'intermédiaire de sa glissière 22 coopérant avec le doigt 21.

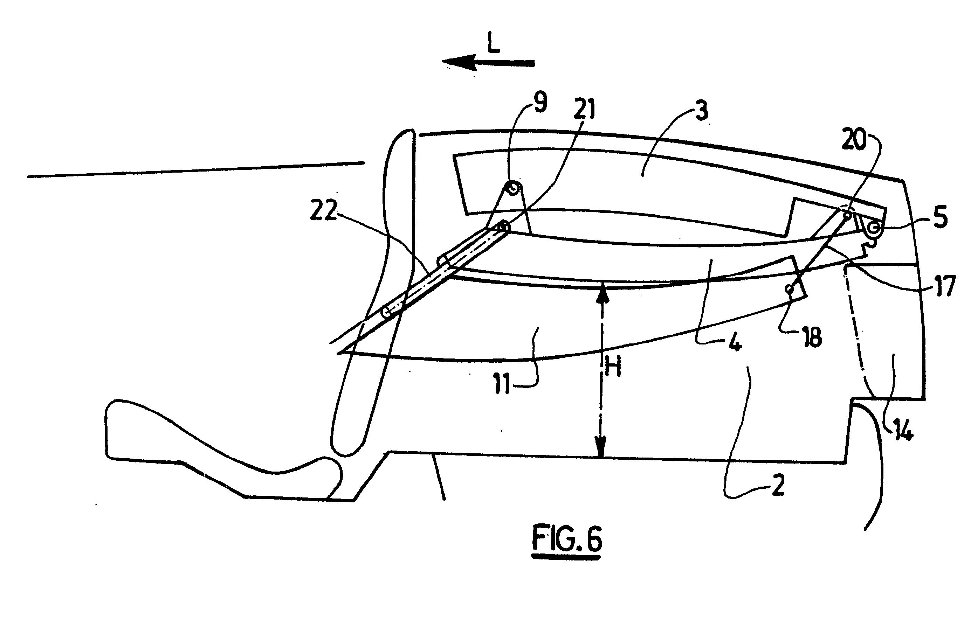

Lorsque le toit 1 est dans sa deuxième position, c'est-à-dire lorsque tous ses éléments sont rangés dans le coffre arrière 2 (figure 6), l'élément latéral 11 est ainsi dégagé vers l'avant du véhicule, et décalé vers le bas par rapport aux éléments avant 3 et central arrière 4, qui sont repliés l'un sur l'autre.

Dans cette position, il peut être prévu un logement de chaque côté des sièges, destiné à recevoir et masquer la partie des éléments latéraux 11 susceptible de dépasser du coffre.

Le toit selon l'invention présente donc l'avantage de pouvoir être escamoté dans le coffre arrière tout en évitant l'encombrement dû aux logements des feux du véhicule, et ce en préservant également une hauteur H de rangement satisfaisante dans ledit coffre.

## Revendications

1. Toit escamotable (1) dans le coffre arrière (2) d'un véhicule, comprenant un élément avant rigide (3) relié de façon articulée à un élément central arrière (4) rigide dont l'extrémité arrière (7) est articulée au châssis (8) du véhicule, et des éléments latéraux (11) droit et gauche dont la partie avant (12) est associée à l'élément avant (3), et dont la partie arrière (13) est associée à l'élément central arrière (4), ces éléments étant mobiles entre une première position dans laquelle ils recouvrent l'habitacle du véhicule, et une deuxième position dans laquelle ils sont repliés à l'intérieur du coffre arrière, **caractérisé en ce qu'**il comprend des premiers moyens d'entraînement (15, 16) des éléments latéraux (11), associés à l'élément avant (3), et des deuxièmes moyens d'entraînement (21, 22) des éléments latéraux (11), associés à l'élément central arrière (4), lesdits premiers et deuxièmes moyens d'entraînement étant agencés pour permettre le dégagement des éléments latéraux (11) vers l'avant du véhicule lorsque les éléments avant (3) et central arrière (4) sont dans leur deuxième position.

2. Toit selon la revendication 1, **caractérisé en ce que** l'élément avant (3) est articulé à l'élément central arrière (4) suivant un axe horizontal (5) perpendiculaire à l'axe longitudinal (L) du véhicule, cet axe horizontal passant par le bord inférieur arrière (6) dudit élément avant.

3. Toit selon la revendication 2, **caractérisé en ce que** l'élément central arrière (4) est articulé au châssis (8) suivant un axe horizontal (9) perpendiculaire à l'axe longitudinal (L) du véhicule, cet axe horizontal passant par le bord inférieur arrière (6) dudit élément central arrière.

4. Toit selon l'une quelconque des revendications précédentes, **caractérisé en ce que** les premiers moyens d'entraînement comprennent un secteur denté (15) prévu sur le bord inférieur arrière (6) de l'élément avant (3), et agencé pour coopérer avec le secteur denté (16) d'une biellette (17) associée au bord avant (12) d'un élément latéral (11).

5. Toit selon la revendication 4, **caractérisé en ce que** l'une des extrémités de la biellette (17) est articulée au bord avant (12) de l'élément latéral (11) suivant un axe horizontal (18) perpendiculaire à l'axe longitudinal (L) du véhicule, l'autre extrémité de la biellette (17) étant articulée au bord avant (19) de l'élément central arrière (4) suivant un axe horizontal (20) perpendiculaire à l'axe longitudinal (L) du véhicule.

6. Toit selon l'une quelconque des revendications précédentes, **caractérisé en ce que** les deuxièmes moyens d'entraînement comprennent un doigt (21) prévu sur la partie arrière (7) de l'élément central arrière (4), ledit doigt étant agencé pour coopérer avec une glissière (22) associée au bord arrière (13) d'un élément latéral (11).

7. Toit selon l'une des revendications 1 à 6, **caractérisé en ce que** le dégagement des éléments latéraux (11) vers l'avant du véhicule s'effectue par rapport aux éléments avant (3) et central arrière (4).

8. Toit selon la revendication 7, **caractérisé en ce que** les éléments latéraux sont décalés vers le bas par rapport aux éléments avant (3) et central arrière (4) lorsque les éléments avant (3) et central arrière (4) sont dans leur deuxième position.

## Patentansprüche

1. Im Kofferraum (2) eines Fahrzeugs versenkbares Dach (1), umfassend ein starres vorderes Element (3), das gelenkig mit einem hinteren mittleren Element (4) verbunden ist, dessen hinteres Ende (7) am Chassis (8) des Fahrzeugs angelenkt ist, und ein linkes und rechtes Seitenelement (11), deren Vorderteil (12) dem vorderen Element (3) zugeordnet ist und deren Hinterteil (13) dem hinteren mittleren Element (4) zugeordnet ist, wobei diese Elemente zwischen einer ersten Stellung, in der sie den Innenraum des Fahrzeugs bedecken, und einer zweiten Stellung, in der sie im Inneren des Kofferraums umgeklappt sind, beweglich sind, **dadurch gekennzeichnet, dass** es erste Mittel (15, 16) zum Antrieb der Seitenelemente (11), die dem vorderen Element (3) zugeordnet sind, und zweite Mittel (21, 22) zum Antrieb der Seitenelemente (11), die dem hinteren mittleren Element (4) zugeordnet sind, umfasst, wobei die ersten und die zweiten Antriebsmittel dazu angeordnet sind, das Ausrücken der Seitenelemente (11) zur Front des Fahrzeugs, wenn sich das vordere Element (3) und das hintere mittlere Element (4) in ihrer zweiten Stellung befinden, zu gestatten.

2. Dach nach Anspruch 1, **dadurch gekennzeichnet, dass** das vordere Element (3) entlang einer horizontalen Achse (5), die senkrecht zur Längsachse (L) des Fahrzeugs verläuft, an dem hinteren mittleren Element (4) angelenkt ist, wobei diese horizontale Achse den unteren Hinterrand (6) des vorderen Elements durchquert.

3. Dach nach Anspruch 2, **dadurch gekennzeichnet, dass** das hintere mittlere Element (4) entlang einer horizontalen Achse (9), die senkrecht zur Längsachse (L) des Fahrzeugs verläuft, an dem Chassis (8) angelenkt ist, wobei diese horizontale Achse den unteren Hinterrand (6) des hinteren mittleren Elements durchquert.

4. Dach nach einem der vorhergehenden Ansprüche, **dadurch gekennzeichnet, dass** die ersten Antriebsmittel einen Zahnsektor (15) aufweisen, der an dem unteren Hinterrand (6) des vorderen Elements (3) vorgesehen ist und zum Zusammenwirken mit dem Zahnsektor (16) einer dem Vorderrand (12) eines Seitenelements (11) zugeordneten Stange (17) angeordnet ist.

5. Dach nach Anspruch 4, **dadurch gekennzeichnet, dass** eines der Enden der Stange (17) entlang einer horizontalen Achse (18), die senkrecht zur Längsachse (L) des Fahrzeugs verläuft, an dem Vorderrand (12) des Seitenelements (11) angelenkt ist, wobei das andere Ende der Stange (17) entlang einer horizontalen Achse (20), die senkrecht zur Längsachse (L) des Fahrzeugs verläuft, an dem mittleren hinteren Element (4) angelenkt ist.

6. Dach nach einem der vorhergehenden Ansprüche, **dadurch gekennzeichnet, dass** die zweiten Antriebsmittel einen Finger (21) aufweisen, der an dem Hinterteil (7) des hinteren mittleren Elements (4) vorgesehen ist, wobei der Finger zum Zusammenwirken mit einer dem Hinterrand (13) eines Seitenelements (11) zugeordneten Gleitführung (22) angeordnet ist.

7. Dach nach einem der Ansprüche 1 bis 6, **dadurch gekennzeichnet, dass** das Ausrücken der Seitenelemente (11) zur Front des Fahrzeugs bezüglich des vorderen Elements (3) und des hinteren mittleren Elements (4) erfolgt.

8. Dach nach Anspruch 7, **dadurch gekennzeichnet, dass** die Seitenelemente bezüglich des vorderen Elements (3) und des hinteren mittleren Elements (4) nach unten hin versetzt sind, wenn sich das vordere Element (3) und das hintere mittlere Element (4) in ihrer zweiten Stellung befinden.

## Claims

1. Retractable roof (1) which can be retracted into the rear luggage compartment (2) of a vehicle, comprising a rigid front element (3) connected in an articulated manner to a rigid rear central element (4) of which the rear end (7) is articulated to the chassis (8) of the vehicle, and right and left side elements (11) of which the front part (12) is associated with the front element (3) and of which the rear part (13) is associated with the rear central element (4), these elements being able to move between a first position in which they cover the passenger compartment of the vehicle, and a second position in which they are folded inside the rear luggage compartment, **characterized in that** said retractable roof comprises first drive means (15, 16) for the side elements (11), which first drive means are associated with the front element (3), and second drive means (21, 22) for the side elements (11), which second drive means are associated with the rear central element (4), said first and second drive means being designed to allow the side elements (11) to be shifted clear towards the front of the vehicle when the front element (3) and rear central element (4) are in their second position.

2. Roof according to Claim 1, **characterized in that** the front element (3) is articulated to the rear central element (4) about a horizontal axis (5) perpendicular to the longitudinal axis (L) of the vehicle, this horizontal axis passing through the rear lower edge (6) of said front element.

3. Roof according to Claim 2, **characterized in that** the rear central element (4) is articulated to the chassis (8) about a horizontal axis (9) perpendicular to the longitudinal axis (L) of the vehicle, this horizontal axis passing through the rear lower edge (6) of said rear central element.

4. Roof according to any one of the preceding claims, **characterized in that** the first drive means comprise a toothed sector (15) provided on the rear lower edge (6) of the front element (3) and designed to co-operate with the toothed sector (16) of a connecting rod (17) associated with the front edge (12) of a side element (11).

5. Roof according to Claim 4, **characterized in that** one of the ends of the connecting rod (17) is articulated to the front edge (12) of the side element (11) about a horizontal axis (18) perpendicular to the longitudinal axis (L) of the vehicle, the other end of the connecting rod (17) being articulated to the front edge (19) of the rear central element (4) about a horizontal axis (20) perpendicular to the longitudinal axis (L) of the vehicle.

6. Roof according to any one of the preceding claims, **characterized in that** the second drive means comprise a finger (21) provided on the rear part (7) of the rear central element (4), said finger being designed to co-operate with a slideway (22) associated with the rear edge (13) of a side element (11).

7. Roof according to one of Claims 1 to 6, **characterized in that** the shifting-clear of the side elements (11) towards the front of the vehicle takes place with respect to the front element (3) and rear central element (4).

8. Roof according to Claim 7, **characterized in that** the side elements are offset downwards with respect to the front element (3) and rear central element (4) when the front element (3) and rear central element (4) are in their second position.
